# EUROPEAN PATENT SPECIFICATION

(11) **EP 2 659 622 B1**
(45) Date of publication and mention of the grant of the patent: **09.03.2016**
(21) Application number: 11794499.1
(22) Date of filing: 14.12.2011
(51) Int. Cl.: H04L 12/28

(54) **HOME GATEWAY SYSTEM FOR ACCESSING BROADBAND SERVICES**
HOMEGATEWAYSYSTEM FÜR DEN ZUGRIFF ZU BREITBANDDIENSTE
SYSTÈME HOME GATEWAY POUR ACCÉDER AUX SERVICES LARGE BANDE

(30) Priority: 27.12.2010 ES 201031966 U
(43) Date of publication of application: 06.11.2013
(73) Proprietor: Telefónica, S.A., 28013 Madrid (ES)
(72) Inventor: PALACIOS VALVERDE, José Manuel, E-28013 Madrid (ES); LOPEZ DA SILVA, Rafael Alejandro, E-28013 Madrid (ES); FERNÁNDEZ PÉREZ, Mónica, E-28013 Madrid (ES); GARCÍA BRASCHI, Carlos, E-28013 Madrid (ES)
(74) Representative: Carlos Hernando, Borja
(86) International application number: PCT/EP2011/072728
(87) International publication number: WO 2012/089504

(56) References cited:
- US-A- 6 073 176
- US-A1- 2003 117 954

## Description

### Field of the art

The present invention generally relates to a home gateway system for accessing broadband services, and more particularly to a system comprising networking and service capabilities implemented, virtualized, in separate elements of a broadband service provider network, thus providing a home gateway capabilities Virtualization system.

### Prior State of the Art

The current service deployment in Home Networks by Broadband Service Providers rely on a device known as "Home Gateway". This device is the evolution of the broadband access modem/router used in the initial broadband deployments. Its acceptance as a de facto piece of the broadband access architecture has been fostered by the Home Gateway Initiative organization (HGI) composed by network operators and equipment vendors.

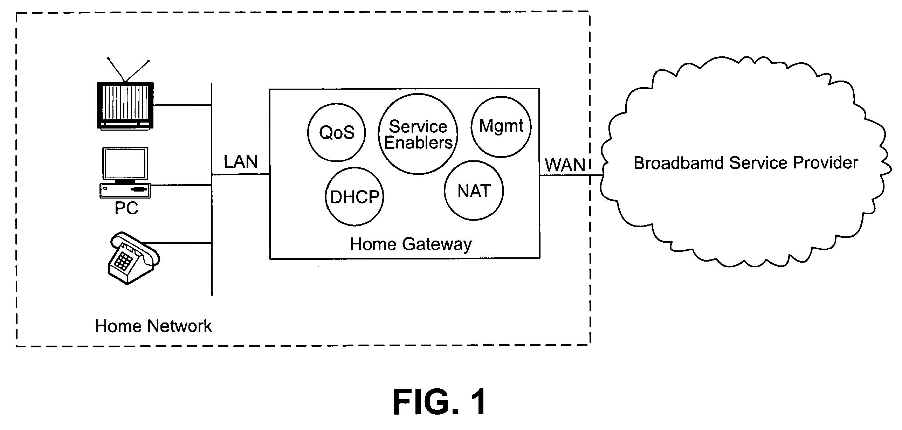

The HGI views the Home Gateway as "the missing piece in the puzzle" to support the next generation of services to the home. As such the Home Gateway is deployed at the customers' home and incorporates different kind of functionalities (as shown in Figure 1):
- Networking capabilities: DHCP server, NAT functionality, WAN/LAN interfaces
- Management capabilities: the Home Gateway must be manageable by the Broadband Service Provider and must allow access to end devices at the Home Network
- QoS capabilities: classification, marking, queueing and scheduling
- Service support: application layer gateways, SIP communications support, IMS communications support, multicast support, messaging, etc.

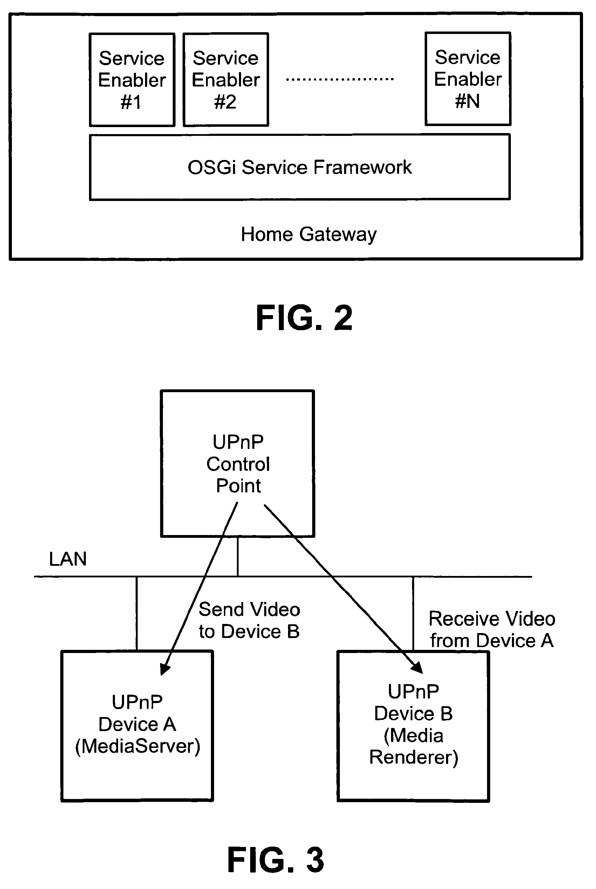

In order to support services, even beyond those standardized by the HGI, Home Gateways usually act as service gateways following the recommendations of the OSGi Alliance. The OSGi Framework enables the deployment of software by a set of standardized primitives that allow applications to be constructed from small, reusable and collaborative components. OSGi Framework is based on Java technology so that the software is multi-platform. By making use of OSGi technology, Broadband Service Operators can deploy customized service enablers in the Home Gateway that allow different service deployments in the Home Network, as shown in Figure 2.

Universal Plug and Play (UPnP) defines an architecture to enable seamless peer-to-peer connectivity of home network devices. The UPnP architecture defines the communication between special devices called control points and controlled devices (or simply "devices") as shown in Figure 3. The control points can query the state of variables on the devices and can invoke actions on the devices. The devices defined so far in UPnP are mainly:
- A/V devices (Media Server, Media Renderer and Content Directory)
- Communication devices (Internet Gateway Device, WLAN Access Point, QoS Device, QoS Policy Holder, QoS Manager)
- Home Automation devices (lighting controls, solar protection blind, HVAC)
- Home Surveillance (Digital Security camera)
- Remote peripherals (remote printer, scanner)
- Remote access capabilities to bridge remote UPnP devices to a Home UPnP domain
- Security capabilities for UPnP transactions

UPnP relies on service discovery and eventing procedures that make use of Layer 2 multicast, so UPnP is restricted to LAN networks such as Home Networks with, so far, limited extensions to make it work beyond local boundaries.

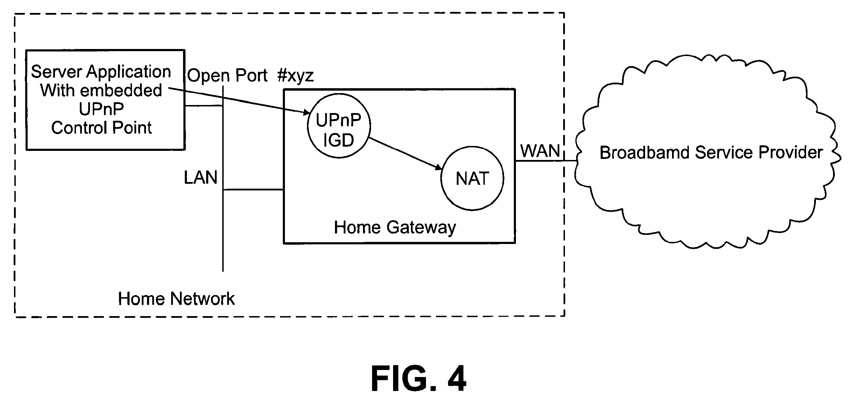

Home Gateways typically implement an UPnP Internet Gateway Device since its networking capabilities correspond with those of an Internet Gateway Device. In that respect they can be controlled from a UPnP control point for example to configure port mappings in the Home Gateway NAT table dynamically as requested by applications with an embedded UPnP control point, as shown in Figure 4.

In addition to UPnP IGD functionality, if equipped with local storage, Home Gateways can act as UPnP Media Server or Content Directory devices, so that A/V communications can be sent from the Home Gateway to UPnP enabled home devices.

US patent application 2003/117954 discloses a telecommunication system to interconnect end-users and comprises one or more interconnected Virtual Service Networks each associated to a data transport network. Each Virtual Service Network comprises a Virtual Service Network Controller to control the resources of the Virtual Service Network and to perform a per-user admission control on each dataflow wanting to be transferred through said associated data transport network.

US patent 7,548,960 provides a way for external service providers outside Home provide multimedia services to UPnP devices inside home making use of a Home Gateway that hosts a service gateway platform. Making use of OSGi technology, Virtual UPnP A/V Media Servers are dynamically generated and downloaded to the Home Gateway. In order to do that, an UPnP Control Point at the Home Gateway gathers information from the home UPnP devices and reports of their capabilities to the external service platform so that the appropriate Virtual UPnP A/V Media Servers for those devices are generated and downloaded to the Home Gateway. When content is to be transmitted, the Virtual Media Server is in charge of acting as a proxy between the protocol used by the external service and the UPnP A/V communications with the home devices.

The current multimedia services (IPTV and VoD) provided with customized Set-Top Boxes present several technical drawbacks:
- The customized developments for the operator service are not deployable in Consumer Electronics that the user already may have.
- The management of home devices such as the set-top box is not always possible because the Home Gateway or broadband modem router is not always managed by the operator (e.g. the user takes his CPE out of management by manually changing configuration)
- For the same reason Set-Top Boxes are not always possible to upgrade remotely
- Customized Set-Top Boxes are tailored to the network solution for video distribution of the service provider. Any change in the service architecture may result in new developments in the Set-Top Box and these must be preferably remotely upgraded

US patent 7,548,960 enables making use of Consumer Electronic devices for enjoying multimedia services from Broadband Service Providers. However it relies on a Home Gateway which encompasses OSGi compliant Service Gateway functions in order to decouple the protocols used in the external network from the UPnP technology used at Home. This results in:
- A piece of equipment that requires a great level of computing power and resources to be deployed at the customers home and dedicated to only one customer
- A complex equipment that is upgraded dynamically based on events in the Home devices. This complexity makes it a failure-prone equipment, while at the same time this equipment is a single point of failure for the broadband connectivity of the customer.
- The equipment integrates service logic and physical connectivity. The evolution in networking technology (e.g. from 100Mb/s to 1 Gb/s evolution, from 802.11 b to 802.11 n) may force a replacement in the equipment base, while the service logic may remain the same. All the service processing power of the previous version has to be disregarded just to upgrade the networking capabilities.

### Description of the Invention

It is necessary to offer an alternative to the state of the art which covers the gaps found therein.

To that end, the present invention provides a home gateway system according to claim 1.

On contrary to the known systems, the system of the invention comprises, in a characteristic manner, a network termination device at said home network, and networking and service capabilities implemented, virtualized, in separate elements of a broadband service provider network, and connected to said termination device.

Embodiments of the system of the invention are described according to the appended claims, and in a posterior section.

Therefore, the present invention defines a "distributed" virtualization system of the Home Gateway capabilities. The virtualization system is designed according to the following principles:
- Simplification of the device that connects the Home Network to the Broadband Service Operator.
- Virtualization in the network of as many Home Gateways capabilities as possible.
- Split in separate system elements of service and networking capabilities of the current Home Gateway.
- Service support based on Home Communication protocols so that Consumer Electronic devices can be used as service terminals.

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 illustrates the different kind of functionalities incorporated in a conventional Home Gateway.
Figure 2 shows schematically the use of OSGi technology for making Broadband Service Operators able to deploy customized service enablers in a conventional Home Gateway that allow different service deployments in the Home Network.
Figure 3 illustrates the communication between special devices called control points and controlled devices in a UpnP architecture.
Figure 4 illustrates a Home Gateway implementation composed by an UpnP Internet Gateway Device controlled by an UpnP control point to configure port mappings in the Home Gateway NAT table dynamically.
Figure 5 schematically illustrates the system of the invention, for an embodiment, including four main elements.

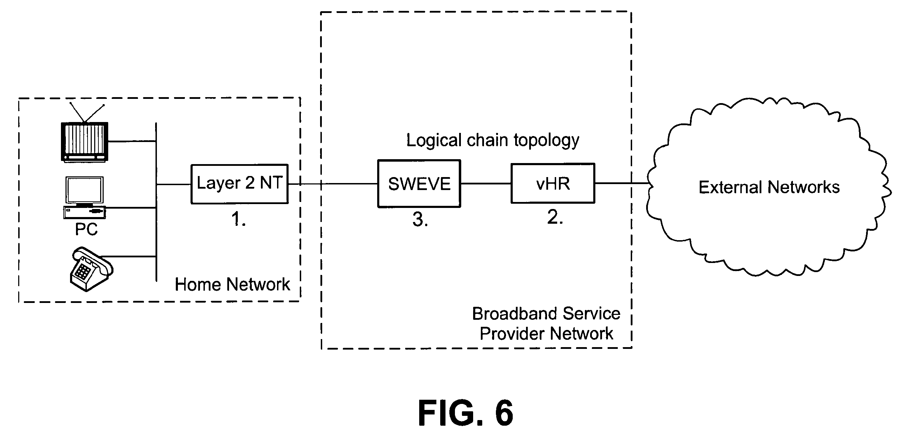

Figure 6 shows the system of the invention implementing a chain topology for the elements thereof (Layer 2 NT -> SWEVE -> vHR) instead of a typical LAN topology.

### Detailed Description of Several Embodiments

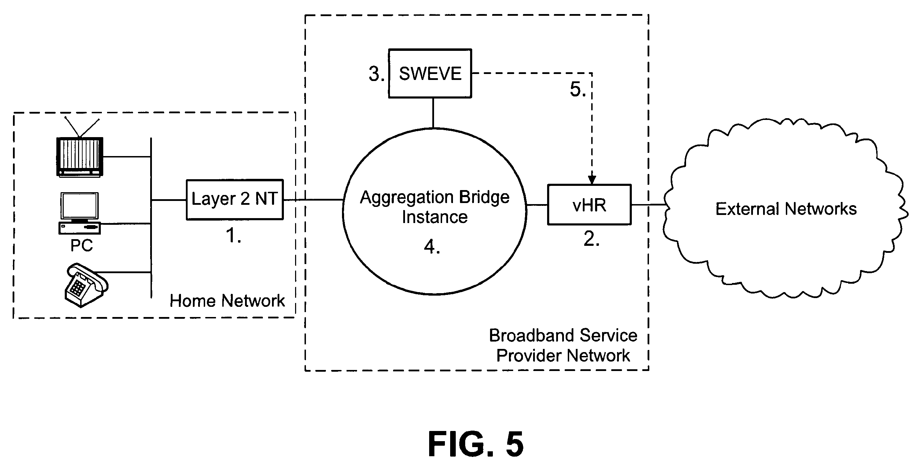

As can be seen in Figure 5, for the embodiment illustrated, the system of the invention, also called in this section as virtualization system, comprises the following elements:
- A layer 2 network termination (NT) (1) at the home network. Possible embodiments of this layer-2 NT are GPON ONTs or xDSL modem/routers working in bridged mode.
- A virtualized Home Router (vHR) (2) devoted only to Layer 3 IP networking functionality that includes at least:
   ∘ NAT functionality with port mapping capabilities.
   ∘ External networks facing session support (e.g. static IP, PPP, DHCP, etc).
   ∘ Ethernet based user facing interface and QoS capabilities.
   ∘ DHCP server functionality, although it may reside alternatively in the SWEVE for specific service support or due to limited implementation of the vHR.

A possible embodiment of the virtual Home Router are Virtual Routing and Forwarding instances in shared operator network equipment, e.g. access nodes (DSLAM, OLT), IP edge node (BRAS, BNG).
- A Software Execution Virtual Environment (SWEVE) (3) that:
   ∘ It is located in shared operator network equipment (e.g. virtualized server resources).
   ∘ It is logically connected to the Aggregation Bridge instance (4), so that it has Layer 2 connectivity with home devices and with the user facing interface of the virtual Home Router (2).
   ∘ Hosts DHCP server functionality if not supported in the virtual Home Router (2).
   ∘ It acts as Service Gateway between the external implementation of provider services (RTSP, IP multicast, HTTP, TR-111, etc) and Layer 2 multicast/broadcast dependant home communications protocols (e.g. UPnP, SMB protocol, local device management protocols). The SWEVE implements a 2 leg (internal vs. external) communication model for the services supported.
   ∘ It supplements Home Gateway functions that may be not included in the Virtual Home Router due to lack of resources (processing power, limited implementation in state of the art, etc). Examples of such functions would be UPnP IGD function support, TR-111 part 1 support, ALG support, firewall capabilities and content filtering.
   ∘ Home Gateway functions that require in-line traffic processing (e.g. ALG or firewall support), rely on the SWEVE (3)executing ARP proxy for the IP address of the virtual Home Router ARP replies from the Virtual Home Router (2) itself are filtered by the Aggregation Bridge Instance (4). The SWEVE (3) inspects/filters/modifies the payload of this traffic and forwards it to the vHR IP address without adding a Layer 3 hop (no modification of IP headers).
   ∘ It has management access (5) to the virtual Home Router (2) so that it can inspect and modify its configuration. In particular the SWEVE (3) can learn about the public IP addresses used by the virtual Home Router (2), can check the NAT mapping table at the Virtual Home Router (2) and can configure port mapping rules at the vHR.
- An aggregation Bridge Instance (4) that:
   ∘ Provides Layer Ethernet Bridging connectivity to the Layer 2 NT (1), vHR (2) and SWEVE (3) elements of the system.
   ∘ Is implemented in access/aggregation equipment in the operator network (e.g. DSLAM, OLT, Metro switches, etc.).
   ∘ Has the capability of filtering ARP traffic from the port connected to the vHR, so that traffic destined to the vHR (2) can be diverted to the SWEVE (3) by means of ARP proxy at the SWEVE (3).

For an embodiment, the system of the invention is used according to the following procedure:
The Home Devices get an IP address from the DHCP server, typically in the virtual Home Router (2) or alternatively in the SWEVE (3). The DHCP requests and responses are forwarded by the Layer 2 NT (1) to the DHCP server. The default gateway provided in the DHCP answer is the IP address of the virtual Home Router (2) at the user facing interface.

Whenever a Home Device wants to connect with a destination outside its Home Network, it will forward the packets to the IP address of the virtual Home Router (2). The virtual Home Router (2) applies NAT/PAT technology to preserve the number of IP addresses used in the external operator network.

The SWEVE (3) is logically connected to the user facing interface of the virtual Home Router (2) and has Layer 2 connectivity with the Home Devices as determined by regular Ethernet Layer 2 bridging technology. The SWEVE (3) gets its IP address from the DHCP server at the virtual Home Router (2) or alternatively a static IP address out of the DHCP range could be devoted for it.

The SWEVE (3) acts as Service Gateway to the external services. For different services, different home communication technologies and external network technologies can be used depending on the state-of-the-art. So far of writing the present document the following technologies can be used for these service examples:
- Media services (IPTV, VoD, etc):
   ∘ Home communications: UPnP AV architecture, DLNA.
   ∘ External network: RTSP, HTTP, IP multicast.
- Network Storage:
   ∘ Home communications: SMB protocol.
   ∘ External network: FTP, HTTP.
- Device Management:
   ∘ Home communications: proprietary device management (command line interface, SNMP proprietary MIBs, UPnP device management, etc.).
   ∘ External network: TR-111.

The SWEVE (3) publishes the operator services in the Home Network making use of a Layer 2 multicast/broadcast dependant technology (e.g. UPnP Media Server, SMB network drive, etc). When an internal request is received at the SWEVE (3) the Service Gateway proxies the request to the corresponding external service platform making use of the appropriate protocol (e.g. RTSP, IP multicast, HTTP, STUN, etc). If necessary, the SWEVE (3) configures the required port mappings in the virtual Home Router (2) so that incoming connections are permitted to the specified internal endpoints.

Besides being a Service Gateway for a number of services, the SWEVE (3) may supplement the vHR (2) with networking capabilities typically supported in the physical Home Gateways but that are not usually supported in the typical embodiment of the vHR (virtual routers in network operator equipment). Such capabilities are at the moment of writing this patent application:
- UPnP IGD function. The SWEVE (3) acts as an UPnP IGD device on behalf of the vHR(2). When a UPnP control point wants to configure port mappings in the vHR (2) it communicates with UPnP IGD function in the SWEVE (3) which will configure the port mappings in the vHR (2) via the management interface (5).
- TR-111 part 1 support. The SWEVE (3) hosts the DHCP server for the Home Network, detects TR-069 enabled devices in the Home network and creates the association of these devices with its own identity in the ACS. In the vHR (2) incoming TR-069 traffic is redirected via port mapping to the SWEVE (3).
- ALG support. The SWEVE (3) gets the traffic towards the vHR (2) redirected to its own interface via ARP proxy mechanisms. The SWEVE (3) modifies the payload according to the application logic to replace embedded private source IP addresses and ports with the ones used by the vHR (2) in the network facing interface. The SWEVE (3) gets this knowledge via the management interface (5) to the vHR (2), STUN protocol or ICMP based mechanisms. The SWEVE (3) forwards the modified packets to the vHR (2) without modifying the IP headers. If needed the SWEVE (3) configures the required port mappings in the vHR (2) so that incoming traffic of the pertained application gets forwarded to the appropriate internal endpoint.

- Firewall capabilities. Similar to the ALG support, the SWEVE (3) gets the traffic towards the vHR (2) redirected to its own interface via ARP proxy mechanisms. The SWEVE (3) inspects the traversing flows making use of stateful packet inspection techniques.
- Content filtering capabilities. Similar to the ALG support, the SWEVE (3) gets the traffic towards the vHR (2) redirected to its own interface via ARP proxy mechanisms. The SWEVE (3) inspects the URLs and blocks unauthorized URLs.

### Advantages of the Invention

This invention provides the following features:
- The equipment to be deployed at the customer home (Layer 2 NT) has less processing power and functionality than the one currently deployed (Home Gateway).
- This simplified equipment results in fewer failures in the element connecting the Home Network to the Broadband Service Provider (loss of connectivity and loss of services).
- The service logic and the networking capabilities for Home Network service delivery are separated in the SWEVE and vHR. As a consequence, Service Intelligence and Networking capabilities can grow and be upgraded independently of each other.
- The solution can be based on existing Virtual Router implementations that may not count with all the networking features of a Home Gateway, supplemented by advanced networking capabilities at the SWEVE.
- The visibility at layer 2 with home devices enables the using of Consumer Electronic devices as user terminal of the providers services.
- The visibility at layer 2 with home devices by the SWEVE enables Remote Device Management irrespective of the support of TR-069 protocols in the Home Devices.

A person skilled in the art could introduce changes and modifications in the embodiments described without departing from the scope of the invention as it is defined in the attached claims.

### ACRONYMS

- ACS: Autoconfiguration Server.
- DHCP: Dynamic Host Configuration Protocol.
- HGI: Home Gateway Initiative.
- LAN: Local Area Network.
- NAT: Network Address Translation.
- NT: Network Termination.
- STB: Set Top Box.
- SWEVE: Software Execution Virtual Environment.
- UpnP: Universal Plug and Play.
- vHR: Virtual Home Router.
- xDSL: any Digital Subscriber Line.
- WiFi: Wireless Fidelity.

### REFERENCES

[1] Home Gateway Initiative http://www.homegatewayinitiative.org/
[2] UPnP Forum http://www.upnp.org/
[3] OSGi Alliance http://www.osgi.org/

## Claims

1. A home gateway system for accessing broadband services, comprising:
- a home network,
- end devices of said home network,
- a Layer-2 network termination device (1) at said home network, and
- a service provider network comprising a plurality of elements (2, 3),
wherein:
- separate of said elements (2, 3) of said service provider network provide networking and service capabilities to different end devices of said home network;
- said networking and service capabilities are implemented in a virtualised manner in said separate elements (2, 3) of said service provider network;
- said networking and service capabilities are connected to said network termination device (1); and
- a first of said elements is a virtual home router (2) that virtualizes connectivity functionalities, said virtual home router being connected to external networks and sitting in-line of the flow of traffic from the home network to said external networks,
**characterised in that**:
- a second of said elements is a Software Execution Virtual Environment (3) adapted to virtualize advanced networking functionalities that are not supported at said virtual home router (2) due to lack of resources; and
- the system further comprises an aggregation bridge instance (4) across the service provider network, the aggregation bridge instance (4) providing Layer-2 Ethernet Bridging connectivity to the Layer-2 network termination device (1), to the virtual home router (2) and to the Software Execution Virtual Environment (3).

2. Home gateway system as per claim 1, wherein said Software Execution Virtual Environment (3) offers services to the end devices making use of home communication protocols.

3. Home gateway system as per claim 1 or 2, wherein said Software Execution Virtual Environment (3) is connected to said virtual home router (2) for at least modifying its configuration according to the services required.

4. Home gateway system as per claim 1, wherein said aggregation bridge instance (4) connects the Layer 2 network termination device (1), the virtual home router (2) and the Software Execution Virtual Environment (3) through a Local Access Network topology or through a chain topology different from said Local Access Network topology.

5. Home gateway system as per claim 1 or 4, wherein said aggregation bridge instance (4) includes capabilities for filtering Address Resolution Protocol, or ARP, traffic from a port connected to the virtual home router (2), diverting traffic destined to the virtual home router (2) to the Software Execution Virtual Environment (3) by means of an ARP proxy at the Software Execution Virtual Environment (3).

6. Home gateway system as per claim 1, wherein said Layer 2 network termination device (1) is one of a GPON ONT and xDSL modem/routers working in bridged mode.

7. Home gateway system as per claim 1, wherein said connectivity functionalities of said virtualized home router (2) comprise at least Layer 3 IP networking functionalities.

8. Home gateway system as per claim 2, wherein said services offered by said Software Execution Virtual Environment (3) are external services obtained for said external networks, and are at least one of Media services, Network Storage services and Device Management services.

## Patentansprüche

1. Heim-Gateway-System zum Zugriff auf Breitbanddienste, umfassend:
- ein Heimnetzwerk,
- Endgeräte des Heimnetzwerks,
- eine Layer-2-Netzwerk-Abschlussvorrichtung (1) an dem Heimnetzwerk, und
- ein Service-Provider-Netzwerk umfassend mehrere Elemente (2, 3),
wobei:
- einzelne der Elemente (2, 3) des Service-Provider-Netzwerks verschiedenen Endgeräten des Heimnetzwerks Vernetzungs- und Serviceleistungen bieten;
- wobei die Vernetzungs- und Serviceleistungen virtualisiert in den einzelnen Elementen (2, 3) des Service-Provider-Netzwerks implementiert sind;
- wobei die Vernetzungs- und Serviceleistungen mit der Netzwerk-Abschlussvorrichtung (1) verbunden sind; und
- ein erstes der Elemente ein virtueller Heimrouter (2) ist, welcher Konnektivitätsfunktionalitäten virtualisiert, wobei der virtuelle Heimrouter mit externen Netzwerken verbunden ist und in einer Linie des Verkehrsflusses von dem Heimnetzwerk zu den externen Netzwerken liegt,
**dadurch gekennzeichnet, dass**:
- ein zweites der Elemente eine virtuelle Softwareausführungsumgebung (3) ist, welche angepasst ist, um fortschrittliche Vernetzungsfunktionalitäten zu virtualisieren, welche aufgrund fehlender Ressourcen nicht an dem virtuellen Heimrouter (2) unterstützt werden; und
- das System außerdem einen Bündelungsbrückenvorgang (4) in dem Service-Provider-Netzwerk umfasst, wobei der Bündelungsbrückenvorgang (4) der Layer-2-Netzwerk-Abschlussvorrichtung (1), dem virtuellen Heimrouter (2) und der virtuellen Softwareausführungsumgebung (3) eine Layer-2-Ethernet-Überbrückungskonnektivität bereitstellt.

2. Heim-Gateway-System nach Anspruch 1, wobei die virtuelle Softwareausführungsumgebung (3) den Endgeräten Diensten bietet, welche Heim-Kommunikationsprotokolle verwenden.

3. Heim-Gateway-System nach Anspruch 1 oder 2, wobei die virtuelle Softwareausführungsumgebung (3) mit dem virtuellen Heimrouter (2) verbunden ist, um zumindest ihre Konfiguration gemäß den benötigten Diensten zu ändern.

4. Heim-Gateway-System nach Anspruch 1, wobei der Bündelungsbrückenvorgang (4) die Layer-2-Netzwerk-Abschlussvorrichtung (1), den virtuellen Heimrouter (2) und die virtuelle Softwareausführungsumgebung (3) durch eine lokale Zugangsnetzwerktopologie oder durch eine Kettentopologie, welche sich von der lokalen Zugangsnetzwerktopologie unterscheidet, verbindet.

5. Heim-Gateway-System nach Anspruch 1 oder 4, wobei der Bündelungsbrückenvorgang (4) Möglichkeiten zum Filtern von Verkehr eines Adressenauflösungsprotokolls bzw. ARP von einem an dem virtuellen Heimrouter (2) angeschlossenen Anschluss beinhaltet, wobei Verkehr, welcher für den virtuellen Heimrouter (2) bestimmt ist, an die virtuelle Softwareausführungsumgebung (3) durch einen ARP-Proxy an der virtuellen Softwareausführungsumgebung (3) umgeleitet wird.

6. Heim-Gateway-System nach Anspruch 1, wobei die Layer-2-Netzwerk-Abschlussvorrichtung (1) eine von GPON ONT und xDSL-Modems/-Routern ist, welche in dem überbrückten Modus arbeiten.

7. Heim-Gateway-System nach Anspruch 1, wobei die Konnektivitätsfunktionalitäten des virtualisierten Heimrouters (2) zumindest Layer-3-IP-Vernetzungsfunktionalitäten umfassen.

8. Heim-Gateway-System nach Anspruch 2, wobei die durch die virtuelle Softwareausführungsumgebung (3) bereitgestellten Dienste externe Dienste sind, welche für die externen Netzwerke erhalten werden, und zumindest einer von Medien-Diensten, Netzwerk-Speicher-Diensten und Geräte-Verwaltungs-Diensten sind.

## Revendications

1. Système de passerelle domestique pour accéder à des services à large bande, comprenant :
- un réseau domestique,
- des dispositifs d'extrémité dudit réseau domestique,
- un dispositif de terminaison de réseau de Couche 2 (1) dudit réseau domestique, et
- un réseau de fournisseur de service comprenant une pluralité d'éléments (2, 3),
dans lequel:
- séparés lesdits éléments (2, 3) dudit réseau de fournisseur de service fournissent des capacités de mise en réseau et de service aux différents dispositifs d'extrémité dudit réseau domestique ;
- lesdites capacités de mise en réseau et de service sont mises en oeuvre de manière virtualisée dans lesdits éléments séparés (2, 3) dudit réseau de fournisseur de service ;
- lesdites capacités de mise en réseau et de service sont connectées audit dispositif de terminaison de réseau (1) ; et
- un premier desdits éléments est un routeur domestique virtuel (2) qui virtualise les fonctionnalités de connectivité, ledit router domestique virtuel étant connecté à des réseaux externes et mettant en ligne le flux de trafic depuis le réseau domestique auxdits réseaux externes.
**caractérisé en ce que** :
- un deuxième desdits éléments est un Environnement Virtuel d'Exécution de Software (3) apte à virtualiser les fonctionnalités de mise en réseau avancée qui ne sont pas supportées par ledit routeur domestique virtuel (2) dû au manque de ressources ; et
- le système comprend en outre une instance de pont d'agrégation (4) à travers le réseau de fournisseur de service, l'instance de pont d'agrégation (4) fournissant une connectivité de pontage d'Ethernet de Couche 2 au dispositif de terminaison de réseau de Couche 2 (1), au routeur domestique virtuel (2) et à l'Environnement Virtuel d'Exécution de Software (3).

2. Système de passerelle domestique selon la revendication 1, dans lequel ledit Environnement Virtuel d'Exécution de Software (3) offre des services aux dispositifs d'extrémité en faisant usage des protocoles de communication domestique.

3. Système de passerelle domestique selon la revendication 1 ou 2, dans lequel ledit Environnement Virtuel d'Exécution de software (3) est connecté audit routeur domestique virtuel (2) pour au moins modifier sa configuration selon les services requis.

4. Système de passerelle domestique selon la revendication 1, dans lequel ladite instance de pont d'agrégation (4) connecte le dispositif de terminaison de réseau de Couche 2 (1), le routeur domestique virtuel (2) et l'Environnement Virtuel d'Exécution de Software (3) à travers une topologie de réseau d'accès local ou à travers une topologie de chaîne différente de ladite topologie de Réseau d'Accès Local.

5. Système de passerelle domestique selon la revendication 1 ou 4, dans lequel ladite instance de pont d'agrégation (4) inclut des capacités pour filtrer le trafic de Protocole de Résolution d'Adresse, ou ARP, depuis un port connecté au routeur domestique virtuel (2), déviant le trafic destiné au routeur domestique virtuel (2) à l'Environnement Virtuel d'Exécution de Software (3) au moyen d'un proxy ARP à l'Environnement Virtuel d'Exécution de Software (3).

6. Système de passerelle domestique selon la revendication 1, dans lequel ledit dispositif de terminaison de réseau de Couche 2 (1) est un parmi un GPON ONT et les modems/routeurs xDSL travaillant en mode pontage.

7. Système de passerelle domestique selon la revendication 1, dans lequel lesdites fonctionnalités de connectivité dudit routeur domestique virtualisé (2) comprennent au moins des fonctionnalités de mise en réseau de Couche 3 IP.

8. Système de passerelle domestique selon la revendication 2, dans lequel lesdits services offerts par ledit Environnement Virtuel d'Exécution de Software (3) sont des services externes obtenus pour lesdits réseaux externes, et sont au moins un parmi les services Média, les services de Stockage de Réseau et les services de Management de Dispositif.
